# EUROPÄISCHE PATENTSCHRIFT

(11) **EP 1 454 201 B1**
(45) Veröffentlichungstag und Bekanntmachung des Hinweises auf die Patenterteilung: **11.07.2007**
(21) Anmeldenummer: 02792612.0
(22) Anmeldetag: 22.11.2002
(51) Int. Cl.: G05B 19/418

(54) **ENGINEERINGSYSTEM UND AUTOMATISIERUNGSSYSTEM**
ENGINEERING AND AUTOMATION SYSTEM
SYSTEME D'INGENIERIE ET SYSTEME D'AUTOMATISATION

(30) Priorität: 23.11.2001 DE 10157539
(43) Veröffentlichungstag der Anmeldung: 08.09.2004
(73) Patentinhaber: SIEMENS AKTIENGESELLSCHAFT, 80333 München (DE)
(72) Erfinder: BECKER, Norbert, 91058 Erlangen (DE); BRINZER, Peter, 91077 Neunkirchen (DE)
(86) Internationale Anmeldenummer: PCT/DE2002/004294
(87) Internationale Veröffentlichungsnummer: WO 2003/046673

(56) Entgegenhaltungen:
- EP-A- 0 362 971
- SCHEER, A.-W.: "CIM/ Computer Integrated Manufacturing/ Der computergesteuerte Industriebetrieb" 1988 , SPRINGER-VERLAG , BERLIN U. A. XP002238421 Seite 109 -Seite 117

## Beschreibung

Die Erfindung betrifft ein Engineeringsystem einerseits und ein Automatisierungssystem andererseits sowie in beiden eine Softwarekomponente, die im Folgenden als Produktionsmodul bezeichnet wird.

Aktuell werden z. B. in der Fertigungstechnik produktionsbegleitend zunehmend mehr Daten aus unterschiedlichsten Gründen, z. B. für Logistik, Qualitätssicherung, Statistik sowie für nachfolgende Produktionsschritte, erfasst. Diese Daten beziehen sich entweder auf das Produkt selbst oder sind für das Bedien- oder Servicepersonal oder die nachfolgenden Produktionsschritte zur Ansteuerung der jeweiligen Produktionsmaschinen relevant. Zur Handhabung dieses Datenaufkommens wird vielfach zusätzlich zu der Automatisierungshardware zur Steuerung der einzelnen Produktionsschritte eine Datenverarbeitungshardware, insbesondere Standard-PC's, nur für die Sammlung und den Transport sowie eventuell zur Visualisierung der anfallenden Daten eingesetzt. Diese Datenverarbeitung wird mit den Standardmitteln der jeweiligen Betriebssysteme, den jeweiligen Kommunikationsmedien und Kommunikationsprotokollen, Datenbanken etc. direkt und verschiedentlich mit selbst geschaffenen Standards gelöst. Dies steht im Gegensatz zum Bestreben nach Standardisierung im Bereich der Automatisierung technischer Prozesse. Zudem sind Individuallösungen, die nur durch entsprechendes Fachpersonal anzufertigen und zu warten sind, teuer sowohl in der Anschaffung, wie auch im Unterhalt.

Die EP 0 362 971 beschreibt ein Datenbank-Managementsystem zur Steuerung von industriellen Fertigungsprozessen. Die Hardware des Systems weist einen Hauptprozessor sowie mehrere lokale Prozessoren auf, die über einen Bus miteinander verbunden sind. Eine Datenbank, auf die einzelne Steuerungsprogramme Zugriff nehmen können, ist über das gesamte System verteilt. Ein Steuerungsprogramm, das auf einen bestimmten Datensatz der Datenbank zugreifen will, fordert diesen bei der Datenbank an. Dazu wird eine Tabelle angelegt, in der für die von jedem lokalen Prozessor entsprechend dem jeweiligen Steuerungsprogramm verwendeten Daten ein Speicherort hinterlegt ist, so dass ein schneller und gezielter Zugriff auf die Daten, also den jeweiligen Datensatz, möglich ist.

Aufgabe der Erfindung ist es folglich, eine Standardisierung der Datenverarbeitung zu schaffen, die weitgehend an im Bereich der Automatisierung bereits geläufige Standards angelehnt ist und damit ohne größere Schwierigkeiten in die Methodik zur Realisierung komplexer Automatisierungssysteme, angefangen von der Ansteuerung eines einzelnen Aktors bis hin zur Aufbereitung von Daten von Managementengineeringsystemen, integrierbar ist.

Damit wären die entsprechenden Aufgaben von dem gleichen Automatisierungspersonal, das die eigentliche Steuerungsprogrammierung übernimmt, in bekanntem Umfeld handhabbar.

Die Erfindung geht von der Annahme aus, dass mit einer speziellen Funktionalität, die im Folgenden als Produktionsmodul bezeichnet wird, das Datenaufkommen besonders effizient handhabbar ist.

Die der Erfindung zugrunde liegende Aufgabe wird gelöst einerseits mit einem Engineeringsystem, mit dem die Anzahl und die Funktionalität der für eine konkrete Automatisierungsaufgabe benötigten Produktionsmodule festgelegt wird, sowie andererseits durch ein Automatisierungssystem, auf oder mit dem diese Produktionsmodule zum Einsatz kommen.

Gemäß der Erfindung ist daher ein Engineeringsystem mit einer Datenbasis und zumindest einem ersten und zweiten Produktionsmodul, das jeweils eine Eingangsschnittstelle und eine Ausgangsschnittstelle aufweist, vorgesehen, wobei jede Eingangsschnittstelle eine vorgebbare Anzahl von Eingängen und jede Ausgangsschnittstelle eine vorgebbare Anzahl von Ausgängen umfasst, wobei die Datenbasis eine Anzahl von Datensätzen mit jeweils zumindest einem Datum umfasst und wobei jedem Eingang und jedem Ausgang einer der Datensätze zuordenbar ist. Die Datenbasis umfasst die Gesamtheit der bei einem Automatisierungsvorhaben zu verarbeitenden Daten, insbesondere die bei einem Automatisierungsvorhaben mit verteilten Automatisierungsstationen stationsübergreifend zu verarbeitenden Daten und insbesondere keine Zustände des automatisierten Prozesses, wie z. B. "Endschalter belegt" oder "Motor vorwärts", sondern im Rahmen des Prozesses erzeugte und veränderte produktbezogene Daten.

Das Produktionsmodul ist eine Softwarekomponente zur Verarbeitung von Daten der oben genannten Art, die eine standardisierte Schnittstelle für einzelne Produktionsstätten oder Produktionsschritte innerhalb eines automatisierten Produktionsprozesses bietet.

Bei einem Automatisierungsvorhaben werden üblicherweise eine Vielzahl von Produktionsstätten oder Produktionsschritten entsprechend dem geplanten Produktionsvorgang miteinander vernetzt oder koordiniert. Für jede Produktionsstätte oder jeden Produktionsschritt ist zumindest ein Produktionsmodul vorgesehen. Die Minimalkonfiguration umfasst damit ein erstes und zweites Produktionsmodul, zwischen denen ein Datenaustausch stattfindet. Zur Aufnahme von Daten der oben genannten Art weist jedes Produktionsmodul eine Eingangsschnittstelle auf. Daten, die das Produktionsmodul erzeugt oder verändert, sind über eine dem Produktionsmodul zugeordnete Ausgangsschnittstelle abrufbar. Jede Eingangsschnittstelle weist eine vorgebbare Anzahl von Eingängen und jede Ausgangsschnittstelle eine vorgebbare Anzahl von Ausgängen auf. Die Anzahl der Ein- und Ausgänge ist für jedes Produktionsmodul individuell entsprechend der jeweiligen Erfordernisse wählbar.

Zur Repräsentation einer Kollektion von jeweils zusammengehörigen Daten weist die Datenbasis eine Anzahl von Datensätzen mit jeweils zumindest einem Datum auf. Ein Datensatz mit nur einem Datum ist z. B. ein die jeweilige Produktionsstation oder den jeweiligen Produktionsschritt identifizierendes oder referenzierendes Datum. Ein Datensatz mit mehr als einem Datum ist z. B. ein Datensatz zur Speicherung von Fehlerinformationen, der neben einem Eintrag zur Referenzierung des Produktionsschrittes oder der Produktionsstation z. B. einen Eintrag zur Speicherung von Datum und Uhrzeit sowie zumindest einen Eintrag zur Identifikation des aufgetretenen Fehlers umfasst, wobei ferner ein weiteres, insbesondere dynamisches Datum zur Referenzierung oder Identifizierung der von dem Fehler betroffenen Produkte vorgesehen sein kann. Jedem Eingang und jedem Ausgang eines jeden Produktionsmoduls ist einer dieser Datensätze zuordenbar, damit z. B. von einer Produktionsstätte oder aus einem Produktionsschritt eine Fehlerinformation an andere Komponenten, insbesondere andere Produktionsmodule, innerhalb des Automatisierungssystems weitergegeben werden kann.

Vorteilhaft weist jedes Produktionsmodul einen Triggereingang auf, bei dessen Aktivierung die den jeweiligen Eingängen zugeordneten Datensätze insbesondere aus der Datenbasis übernommen werden. Durch den Triggereingang kann die Aufnahme von Daten zeitlich gesteuert werden. Nachdem die Datenbasis eine globale Datenbasis ist, auf deren Datensätze gegebenenfalls mehr als ein Produktionsmodul zugreift, ist es wichtig, definiert bestimmen zu können, zu welchem Zeitpunkt ein Datensatz aus der Datenbasis übernommen wird, denn eine Übernahme eines Datensatzes aus der Datenbasis ist nur dann sinnvoll, wenn dessen gegebenenfalls vorhergehende Bearbeitung oder Veränderung durch ein anderes Produktionsmodul abgeschlossen ist. Die Aktivierung des Triggereingangs ist mit dem Zeitpunkt korreliert, zu dem ein Produkt die jeweilige Produktionsstätte erreicht oder zu dem an dem Produkt der jeweilige Produktionsschritt beginnt.

Wenn das erste Produktionsmodul mit dem zweiten Produktionsmodul oder allgemeiner eines der Produktionsmodule mit einem anderen Produktionsmodul verknüpfbar ist, ist es möglich, den Datenfluss und insbesondere-den Zeitpunkt des Datenflusses zwischen einzelnen Produktionsmodulen zu bestimmen. Wenn jedes Produktionsmodul einem Produktionsprozess zugeordnet ist und die den Ausgängen zugeordneten Datensätze nach Beendigung des Produktionsprozesses in die Datenbasis übernommen werden, wird sichergestellt, dass einerseits nur vollständige Datensätze in die Datenbasis übernommen werden und andererseits dieser Übernahmevorgang nur einmal erfolgen muss, so dass der Umfang der zu übermittelnden Daten reduziert wird. Ein Produktionsprozess kann entweder einer Produktionsstation oder einem Produktionsschritt zugeordnet sein.

Vorteilhaft werden bei Beendigung desjenigen Produktionsprozesses, dem das erste Produktionsmodul zugeordnet ist, die den jeweiligen Eingängen des verknüpften, zweiten Produktionsmoduls zugeordneten Datensätze, insbesondere aus der Datenbasis, übernommen. Die Beendigung eines Produktionsprozesses, dem ein Produktionsmodul zugeordnet ist, ist für ein mit diesem Produktionsmodul verknüpftes Produktionsmodul ein geeigneter Zeitpunkt zur Übernahme der den Eingängen des verknüpften Produktionsmoduls jeweils zugeordneten Datensätze. Die Verknüpfung ist entweder selbst der Triggereingang eines Produktionsmoduls oder ein zusätzlicher Eingang, über den dem Produktionsmodul neben dem Triggereingang ein Stimulus zur Übernahme der den Eingängen jeweils zugeordneten Datensätze übermittelbar ist.

Alternativ oder zusätzlich kann auch vorgesehen sein, dass über eine Verbindung zwischen einem ersten und einem zweiten Produktionsmodul ein Datenaustausch-vorgegeben wird. Über die Verknüpfung kann z. B. ein Ausgang eines ersten Produktionsmoduls mit einem Eingang eines zweiten Produktionsmoduls verknüpft werden, so dass, wenn am jeweiligen Ausgang des ersten Produktionsmoduls z. B. ein Datensatz mit Fehlerinformationen ansteht, dieser direkt an den entsprechenden Eingang des zweiten Produktionsmoduls, der dann zur Übernahme von Fehlermeldungen vorgesehen sein muss, übermittelbar ist. Bei einem derartigen Vorgehen kann mehr als eine Verknüpfung zwischen dem ersten und dem zweiten Produktionsmodul bestehen.

Vorteilhaft ist jedem Datensatz der Datenbasis ein Bezeichner oder eine Typinformation und insbesondere ein Format zugeordnet. Der Bezeichner erleichtert die Identifizierbarkeit und Referenzierbarkeit des Datensatzes. Die Typinformation ermöglicht einen leichteren Zugriff auf ein Datum des Datensatzes, wie dies aus den so genannten höheren Programmiersprachen bei den so genannten zusammengesetzten Datentypen bekannt ist. Ein optional dem Datensatz, gegebenenfalls auch einem einzelnen Datum innerhalb des Datensatzes zuordenbares Format ermöglicht die konsistente Darstellung ein und desselben Datums auch durch unterschiedliche Produktionsmodule über das gesamte Automatisierungsprojekt.

Für das einzelne Produktionsmodul sind Anzahl und Funktionalität von Ein- und Ausgängen individuell festlegbar, wobei die Eingänge eines Produktionsmoduls zur Aufnahme der im Produktionsschritt zuzuführenden Daten und unmittelbar zur Ansteuerung und/oder Parametrierung der jeweiligen Produktionshardware und die Ausgänge des Produktionsmoduls zur Ausgabe und eventuellen Weiterleitung der im Produktionsschritt gewonnenen Daten vorgesehen sind. Jedes Produktionsmodul hat dabei Zugriff auf eine globale Datenbasis, die z. B. Daten zur Identifikation des jeweiligen Produktes, gegebenenfalls - wenn die Produktionsanlage zur Produktion unterschiedlicher Produkte vorgesehen ist - auch Daten zur Identifikation der unterschiedlichen Produkte aufweist. Darüber hinaus sind Daten oder zugehörige Typdefinitionen zur Speicherung von Fehlerinformationen oder Daten zur Speicherung von statistischen Informationen vorgesehen.

Für jedes Produktionsmodul ist die Anzahl der Ein- und Ausgänge frei wählbar. Wenn ein Eingang eines Produktionsmoduls generiert ist, ist der Typ der Daten, die über diesen Eingang an das Produktionsmodul übergeben werden können, selektierbar. Die Selektion erfolgt anhand von in der globalen Datenbasis definierten Datentypen.

Üblicherweise ist für jedes Produktionsmodul zumindest ein Eingang vorgesehen, mit dem diesem eine Produktidentifikation übermittelbar ist. Die Produktidentifikation dient zur Einrichtung und Parametrierung der Produktionsstation, wie z. B. wenn die Bestückung einer Platine einer ersten Dimension auf einer Bestückungsanlage anders ausfällt als bei der Bestückung einer Platine anderer Dimension auf der gleichen Bestückungsanlage. Des Weiteren ist für jedes Produktionsmodul üblicherweise zumindest ein Eingang vorgesehen, der die Aktionen spezifiziert, die an der Produktionsstation vorzunehmen sind. Für den Fall eines Bestückungsprozesses, z. B. bei der Bestückung einer Leiterplatte, umfassen diese Daten Bauteildaten, die insbesondere die Art und Anzahl der zu bestückenden Bauteile sowie deren Position auf der Platine angeben. Wenn auf einer ersten Produktionsstation nur Transistoren bestückt werden, umfassen die Bauteildaten eine Spezifikation der Transistoren im oben beschriebenen Umfang. Für ein Produktionsmodul, das sich auf eine Produktionsstation bezieht, auf der in einem anderen Produktionsschritt Widerstände bestückt werden, umfassen die Bauteildaten die entsprechenden Spezifikationen für die Widerstände usw. Zur Fehlerverfolgung oder allgemein zur Produktionsüberwachung zu statistischen Zwecken umfasst jedes Produktionsmodul üblicherweise einen Ausgang für Fehlerinformationen und/oder einen Ausgang, über den Daten über die erfolgreich durchgeführten Produktionsschritte ausgegeben werden. Durch die Verknüpfung der Produktionsmodule, die auf dem Engineeringsystem in einfacher Weise durch entsprechende graphische Hilfsmittel, wie z. B. Verbindungslinien, verdeutlicht wird, werden mögliche Datenflusswege festgelegt.

Die Art, wie zwischen einzelnen Produktionsstationen und damit zwischen den jeweiligen Produktionsmodulen Daten ausgetauscht werden, wird durch die Eingänge der jeweiligen Produktionsmodule festgelegt. Dies soll anhand eines Beispiels verdeutlicht werden: Wenn das Automatisierungssystem z. B. ein Datenarchiv umfasst, wird jedes Produktionsmodul, das Daten erzeugt oder bereits bestehende Daten verändert, mittel- oder unmittelbar mit dem Datenarchiv verbunden sein. Das Produktionsmodul des Datenarchivs weist für jedes mögliche Datum, wie z. B. Fehlerinformationen, Statistikinformationen etc., einen Eingang auf. Lediglich durch die im Engineeringsystem projektierte Verbindung zwischen dem Produktionsmodul einer Produktionsstation und dem entsprechenden Produktionsmodul des Datenarchivs ist der Datenaustausch zwischen den beiden Stationen des Automatisierungssystems gewährleistet, ohne dass sich der jeweilige Bearbeiter um die Details der Datenübermittlung, wie etwa Ansteuerung der Hardware, Kommunikationsprotokolle etc., kümmern müsste.

Jedes Produktionsmodul enthält intern in Software realisierte Mittel zur Ansteuerung der jeweiligen Hardware der Produktionsstation. Die einzige "Verschaltung", die ein Benutzer des erfindungsgemäßen Engineeringsystems damit vornehmen muss, ist die Zuordnung von Eingängen des Produktionsmoduls zu den jeweiligen Eingängen der Steuerungssoftware sowie eine Zuordnung der Ausgänge der Steuerungssoftware zu den Ausgängen des Produktionsmoduls.

Die Aufgabe wird gleichfalls gelöst durch ein Automatisierungssystem mit mindestens einem Automatisierungsgerät, einer Datenbasis und mindestens einer ersten und einer zweiten Produktionsstation, wobei der ersten Produktionsstation zumindest ein erstes Produktionsmodul und der zweiten Produktionsstation zumindest ein zweites Produktionsmodul zugeordnet ist, das jeweils eine Eingangsschnittstelle und eine Ausgangsschnittstelle aufweist, wobei jede Eingangsschnittstelle eine vorgebbare Anzahl von Eingängen und jede Ausgangsschnittstelle eine vorgebbare Anzahl von Ausgängen umfasst, wobei die Datenbasis eine Anzahl von Datensätzen mit jeweils zumindest einem Datum umfasst und wobei jedem Eingang und jedem Ausgang einer der Datensätze zugeordnet ist. Die erste und die zweite Produktionsstation werden dabei durch das Automatisierungsgerät in an sich bekannter Weise gesteuert und/oder überwacht. Der Terminus Produktionsstation bezeichnet - auch im Hinblick auf die obigen Ausführungen - einerseits eine konkrete Produktionshardware, wie z. B. einen Automaten zur Bestückung einer Leiterplatte, andererseits aber gegebenenfalls auch einen Produktionsschritt, der auf einer Produktionsstation abläuft, auf der gegebenenfalls auch weitere Produktionsschritte durchgeführt werden. Exemplarisch sei hier ein Gerät genannt, auf dem zunächst - in einem ersten Produktionsschritt - Bauteile auf einer Leiterplatte bestückt werden und nachfolgend - in einem zweiten Produktionsschritt - die bestückten Bauteile verlötet werden.

Das Automatisierungssystem umfasst ein Automatisierungsgerät, wie z. B. eine speicherprogrammierbare Steuerung, mit einer Verarbeitungsfunktionalität und Mitteln zur Aufnahme von Daten aus einem gesteuerten und/oder überwachten Prozess sowie Mitteln zur Ausgabe von Daten an diesen Prozess, insbesondere zur Ansteuerung der jeweiligen Prozessperipherie. Das Automatisierungssystem umfasst darüber hinaus zumindest zwei Produktionsmodule, die nicht notwendig räumlich oder funktional getrennt sind, zwischen denen jedoch ein Austausch von für den Automatisierungsprozess relevanten Daten stattfindet.

Die obigen und nachfolgenden Ausführungen gelten, soweit sie sich auf das Produktionsmodul beziehen, analog auch für entsprechende vorteilhafte Weiterbildungen des Automatisierungssystems.

Engineeringsystem und Automatisierungssystem unterscheiden sich im Wesentlichen insofern, als mittels des Engineeringsystems Art und Anzahl der Produktionsmodule sowie deren Schnittstellen und eine eventuelle Verknüpfung gemäß der obigen Ausführungen festgelegt werden. Mit den getroffenen Spezifikationen werden ein Steuerprogramm oder gegebenenfalls mehrere Teilsteuerprogramme erzeugt, das oder die auf den einzelnen zur Verarbeitung solcher Steuerprogramme geeigneten Komponenten des Automatisierungssystems, wie z. B. eine Steuereinheit zur Steuerung einer Anlage zur Bestückung einer Leiterplatine oder eine dieser Steuereinheit zugeordnete externe Verarbeitungseinheit mit einer Funktionalität zur Verarbeitung von Steuerprogrammen, geladen wird bzw. werden. Auf oder innerhalb dieses Automatisierungssystems gelangt damit das zur Anwendung, was mittels des Engineeringsystems geplant oder projektiert wurde.

Eine vorteilhafte Weiterbildung des erfindungsgemäßen Automatisierungssystems besteht darin, dass ein ein Datenarchiv verwaltender Datenserver und ein diesem zugeordnetes Datenserverproduktionsmodul vorgesehen sind, das die gleiche Funktionalität wie das erste oder das zweite Produktionsmodul - wie oben beschrieben - aufweist und mit dem ersten und/oder dem zweiten Produktionsmodul verknüpft ist. Ein solches Datenarchiv dient zur Langzeitspeicherung von im Produktionsprozess anfallenden produkt- oder prozessbezogenen Daten, wie z. B. wann und auf welcher Hardware ein konkretes Produkt gefertigt wurde, ob bei der Fertigung des Produktes Fehler aufgetreten sind, wenn Fehler aufgetreten sind, welche Fehler aufgetreten sind sowie wie, wo und mit welchen Mitteln diese Fehler beseitigt wurden. Derartige Daten muss jeder Hersteller im Rahmen der ihm obliegenden Produktbeobachtungspflicht in einer Art und Weise generieren, dass sie auch nach einem längeren Zeitraum einem bestimmten Produkt eindeutig zuordenbar sind, so dass der Hersteller im Fehlerfall des Produktes in die Lage versetzt wird nachzuweisen, dass er alles im Rahmen seiner Möglichkeit Stehende getan hat, dass das Produkt den Produktionsprozess fehlerfrei passiert und verlassen hat.

Das genannte Produktionsmodul weist damit zumindest einen Eingang zur Übernahme eines Datensatzes mit Fehlerinformationen sowie zusätzlich oder alternativ einen Eingang zur Übernahme eines Datensatzes mit allgemeinen statistischen Informationen für den Produktionsprozess mit produkt- und/oder prozessbezogenen Daten auf. Derartige Daten werden üblicherweise von jedem einer Produktionsstation oder einem Produktionsschritt zugeordneten Produktionsmodul geliefert.

Die Verknüpfung der Daten dieses Produktionsmoduls mit dem ersten und/oder zweiten Produktionsmodul ist ein Beispiel, bei dem der Stimulus zur Übernahme der Daten, in diesem Fall zur Übernahme der Eingangsdaten des dem Datenserver zugeordneten Produktionsmoduls, geeignet mit der Beendigung eines Produktionsprozesses in einer Produktionsstation, dem das erste oder zweite Produktionsmodul zugeordnet ist, korreliert ist.

In einer vorteilhaften Ausgestaltung ist das Engineeringsystem Bestandteil des Automatisierungssystems, wodurch eine jederzeitige einfache Anpassung von Art und Funktionalität der Produktionsmodule bzw. der untereinander bestehenden Verknüpfung ermöglicht ist.

Nachfolgend wird ein Ausführungsbeispiel der Erfindung anhand der Figuren beschrieben. Darin zeigen:
- Figur 1: schematisch ein Automatisierungssystem,
- Figur 2: ein Produktionsmodul und
- Figur 3: eine Datenbasis mit Datensätzen.

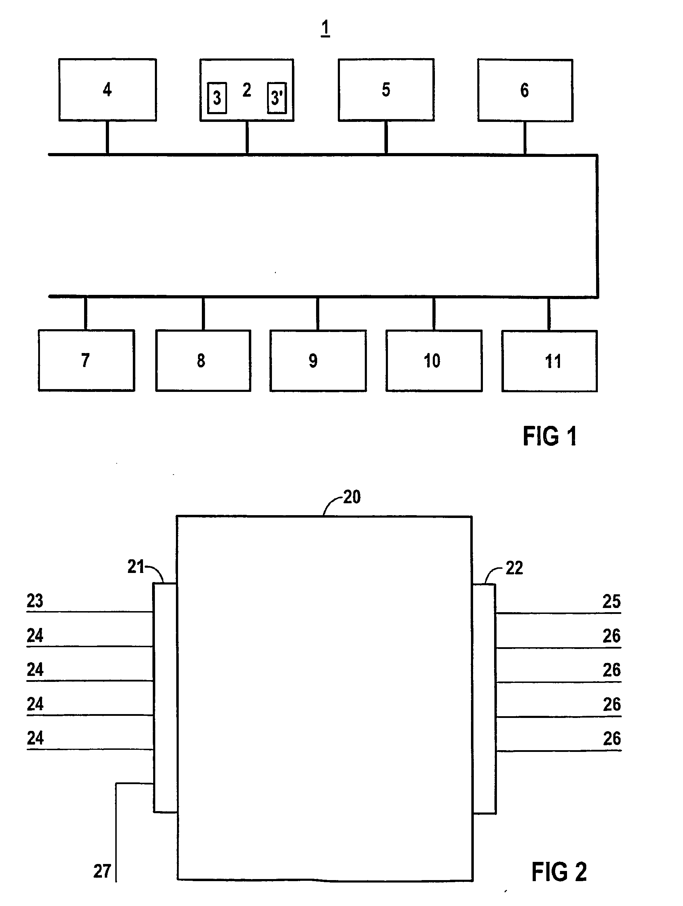

Das Automatisierungssystem 1 umfasst einen Datenserver 2 sowie mindestens ein Automatisierungsgerät 4, 5, 6, 7, 8, 9, 10, 11, wie z. B. eine speicherprogrammierbare Steuerung mit einer Verarbeitungsfunktionalität und Mitteln zur Aufnahme von Daten aus einem gesteuerten und/oder überwachten Prozess sowie Mitteln zur Ausgabe von Daten an diesen Prozess, insbesondere zur Ansteuerung der jeweiligen Prozessperipherie. Das Automatisierungssystem 1 umfasst darüber hinaus zumindest zwei Produktionsmodule 20 (Figur 2), die nicht notwendig räumlich oder funktional getrennt sind, zwischen denen jedoch ein Austausch von für den Automatisierungsprozess relevanten Daten stattfindet.

Der Datenserver 2 umfasst eine Datenbasis 3 sowie ein Datenarchiv 3'. Die Datenbasis 3 umfasst sämtliche Daten, die für den aktuellen Produktionsprozess im Automatisierungssystem 1 relevant sind. Das Datenarchiv 3' umfasst auch zurückliegende, nicht mehr für den aktuellen Produktionsprozess relevante Daten, die jedoch zu Dokumentationszwecken vorgehalten werden.

Jedes Automatisierungsgerät 4 ... 11 steuert eine Produktionsstation 4 ... 11 oder den darauf ablaufenden Produktionsprozess 4 ... 11, weshalb die Begriffe Automatisierungsgerät, Produktionsstation und Produktionsprozess synonym verwendet werden.

Figur 2 zeigt eine schematische Darstellung eines Produktionsmoduls 20 mit einer Eingangsschnittstelle 21 und einer Ausgangsschnittstelle 22. Der Eingangsschnittstelle 21 ist eine Anzahl von Eingängen 23, 24 zugeordnet. Entsprechend ist der Ausgangsschnittstelle 22 eine Anzahl von Ausgängen zugeordnet. Ferner weist das Produktionsmodul 20 einen Triggereingang 27 auf, über den dem Produktionsmodul 20 ein Stimulus zur Übernahme von Daten über die Eingänge 23, 24 übermittelt werden kann.

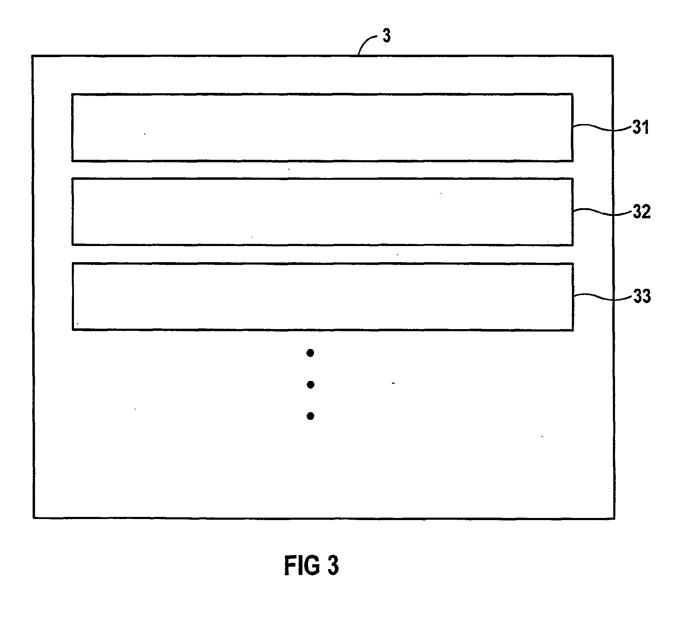

Figur 3 zeigt die Datenbasis 3 mit einigen darin enthaltenen Datensätzen 31, 32, 33. Die Datenbasis 3 kann auch als verteilte Datenbasis 3 ausgeführt sein (nicht dargestellt), die ganz oder teilweise in jeder Produktionsstation 2, 4 ... 11 vorgehalten wird.

Mit Bezug auf Figur 1 seien exemplarisch zwei der Produktionsstationen 4, 5, z. B. eine erste und zweite Reparaturstation 4, 5, drei der Produktionsstationen 6, 7, 8, z. B. eine erste, zweite und dritte Bestückungsstation 6, 7, 8, eine der Produktionsstationen 9, z. B. eine Lötstation 9, eine weitere Produktionsstation 10, z. B. eine Prüfstation, und eine letzte Produktionsstation 11, z. B. eine Montagestation 11.

Das Automatisierungssystem 1 ist damit in der Lage, den Produktionsprozess z. B. einer Leiterplattenfertigung zu steuern. Bei Beschickung z. B. einer Bestückungsstation 6, 7, 8 mit einer Leiterplatte wird der Triggereingang 27 des der entsprechenden Bestückungsstation 6, 7, 8 zugeordneten Produktionsmoduls 20 belegt, so dass die den Eingängen 23, 24 zugeordneten Daten aus der Datenbasis 3 übernommen werden. Aus den aus der Datenbasis 3 übernommenen Daten ergibt sich, wie die Leiterplatte zu bestücken ist (Art und Position der Bauteile). Entsprechendes gilt z. B. für eine Lötstation 9, bei der die durch das zugehörige Produktionsmodul 20 aus der Datenbasis übernommenen Daten festlegen, nach welchem Verfahren und unter welchen Randbedingungen das Löten der bestückten Bauteile auf der Leiterplatte erfolgen soll.

Kommt es im Bestückungsprozess 6, 7, 8 oder im Lötprozess 9 zu Fehlern, so werden diesbezügliche Daten mittels der Ausgänge 25, 26 desjenigen Produktionsmoduls 20, bei dessen Produktionsschritt 6, 7, 8, 9 der Fehler aufgetreten ist, in die Datenbasis 3 eingetragen. Sobald die fehlerhafte Leiterplatte zu einer Reparaturstation 4, 5 gelangt, kann auf diese Daten mittels der Eingänge 23, 24 des Produktionsmoduls 20 der Reparaturstation 4, 5 zugegriffen werden, um den Fehler zu lokalisieren und gegebenenfalls zu beseitigen.

Damit lässt sich die Erfindung zusammenfassend auch kurz beschreiben wie folgt: Es wird ein Engineeringsystem 1 und ein korrespondierendes Automatisierungssystem 1, dessen Komponenten gemäß den Vorgaben aus dem Engineeringsystem zusammenwirken, mit einer Datenbasis 3 und zumindest einem ersten und zweiten Produktionsmodul 20 angegeben, das eine Eingangsschnittstelle 21 und eine Ausgangsschnittstelle 22 aufweist, wobei jede Eingangsschnittstelle 21 eine vorgebbare Anzahl von Eingängen 23, 24 und jede Ausgangsschnittstelle 22 eine vorgebbare Anzahl von Ausgängen 25, 26 umfasst und wobei die Datenbasis 3 eine Anzahl von Datensätzen 31, 32, 33 mit jeweils zumindest einem Datum umfasst und wobei jedem Eingang 23, 24 und jedem Ausgang 25, 26 einer der Datensätze 31, 32, 33 zuordenbar ist.

## Patentansprüche

1. Engineeringsystem (1) mit einer Datenbasis (3) und zumindest einem ersten und zweiten Produktionsmodul (20), das eine Eingangsschnittstelle (21) und eine Ausgangsschnittstelle (22) aufweist,
wobei jedes Produktionsmodul (20) einem Produktionsprozess (2, 4, 5, 6, 7, 8, 9, 10, 11) zuordenbar ist, wobei jede Eingangsschnittstelle (21) eine vorgebbare Anzahl von Eingängen (23, 24) und jede Ausgangsschnittstelle (22) eine vorgebbare Anzahl von Ausgängen (25, 26) umfasst und wobei die Datenbasis (30) eine Anzahl von Datensätzen (31, 32, 33) mit jeweils zumindest einem Datum umfasst und wobei jedem Eingang (23, 24) und jedem Ausgang (25, 26) einer der Datensätze (31, 32, 33) zuordenbar ist,
**dadurch gekennzeichnet, dass**
das erste Produktionsmodul (20) mit dem zweiten Produktionsmodul (20) verknüpfbar ist
und bei Beendigung desjenigen Produktionsprozesses (2, 4 ... 11), dem das erste Produktionsmodul (20) zugeordnet ist, die den jeweiligen Eingängen (23, 24) des verknüpften, zweiten Produktionsmoduls (20) zugeordneten Datensätze (31, 32, 33) vom zweiten Produktionsmodul (20) übernommen werden.

2. Engineeringsystem nach Anspruch 1, wobei jedes Produktionsmodul (20) einen Triggereingang (27) aufweist, bei dessen Aktivierung die den jeweiligen Eingängen (23, 24) zugeordneten Datensätze (31, 32, 33) - insbesondere aus der Datenbasis (3) - übernommen werden.

3. Engineeringsystem nach Anspruch 1, wobei die den Ausgängen (25, 26) zugeordneten Datensätze (31, 32, 33) nach Beendigung des Produktionsprozesses (2, 4 ... 11) in die Datenbasis (3) übernommen werden.

4. Engineeringsystem nach Anspruch 1, wobei jedem Datensatz (31, 32, 33) ein Bezeichner oder eine Typinformation und insbesondere ein Format zuordenbar ist.

5. Automatisierungssystem (1) mit mindestens einem Automatisierungsgerät, einer Datenbasis (3) und mindestens einer ersten und einer zweiten durch das Automatisierungsgerät gesteuerten und/oder überwachten Produktionsstation (2, 4, 5, 6, 7, 8, 9, 10, 11),
wobei der ersten Produktionsstation (2, 4 ... 11) zumindest ein erstes Produktionsmodul (20) und der zweiten Produktionsstation (2, 4 ... 11) zumindest ein zweites Produktionsmodul (20) zugeordnet ist, das jeweils eine Eingangsschnittstelle (21) und eine Ausgangsschnittstelle (22) aufweist,
wobei jede Eingangsschnittstelle (21) eine vorgebbare Anzahl von Eingängen (23, 24), jede Ausgangsschnittstelle (22) eine vorgebbare Anzahl von Ausgängen (25, 26) und
wobei die Datenbasis (3) eine Anzahl von Datensätzen (31, 32, 33) mit jeweils zumindest einem Datum umfasst und wobei jedem Eingang (23, 24) und jedem Ausgang (25, 26) einer der Datensätze (31, 32, 33) zugeordnet ist,
**dadurch gekennzeichnet, dass**
das erste Produktionsmodul (20) mit dem zweiten Produktionsmodul (20) verknüpft ist
und bei Beendigung desjenigen Produktionsprozesses (2, 4 ... 11), dem das erste Produktionsmodul (20) zugeordnet ist, die den jeweiligen Eingängen (23, 24) des verknüpften, zweiten Produktionsmoduls (20) zugeordneten Datensätze (31, 32, 33) vom zweiten Produktionsmodul (20) übernommen werden.

6. Automatisierungssystem nach Anspruch 5, wobei jedes Produktionsmodul (20) einen Triggereingang (27) aufweist, bei dessen Aktivierung die den jeweiligen Eingängen (23, 24) zugeordneten Datensätze (31, 32, 33), insbesondere aus der Datenbasis (3), übernommen werden.

7. Automatisierungssystem nach Anspruch 5, wobei jedes Produktionsmodul (20) einem Produktionsprozess (2, 4 ... 11) zugeordnet ist und wobei die den Ausgängen (25, 26) zugeordneten Datensätze (31, 32, 33) nach Beendigung des Produktionsprozesses (2, 4 ... 11) in die Datenbasis (3) übernommen werden.

8. Automatisierungssystem nach Anspruch 5, wobei jedem Datensatz (31, 32, 33) ein Bezeichner, eine Typinformation und insbesondere ein Format zugeordnet ist.

9. Automatisierungssystem nach einem der Ansprüche 5 bis 8, wobei ein ein Datenarchiv (3') verwaltender Datenserver (2) und ein diesem zugeordnetes Datenserver-Produktionsmodul vorgesehen sind, das die gleiche Funktionalität wie das erste oder zweite Produktionsmodul (20) aufweist und mit dem ersten und/oder dem zweiten Produktionsmodul (20) verknüpft ist.

10. Automatisierungssystem nach einem der Ansprüche 5 bis 9 mit einem Engineeringsystem nach einem der Ansprüche 1 bis 4.

## Claims

1. Engineering system (1) comprising a database (3) and at least one first and second production module (20), each of which has an input interface (21) and an output interface (22),
wherein each production module (20) can be assigned to a production process (2, 4, 5, 6, 7, 8, 9, 10, 11),
wherein each input interface (21) comprises a predefinable number of inputs (23, 24) and each output interface (22) comprises a predefinable number of outputs (25, 26) and
wherein the database (30) includes a number of data records (31, 32, 33), each of which comprises at least one data item, and wherein each input (23, 24) and each output (25, 26) can be assigned one of the data records,
**characterised in that**
the first production module (20) can be linked to the second production module (20)
and upon completion of the production process (2, 4 ... 11) to which the first production module (20) is assigned, the data records (31, 32, 33) assigned to the respective inputs (23, 24) of the linked second production module (20) are transferred by the second production module (2).

2. Engineering system according to claim 1, wherein each production module (20) has a trigger input (27) upon activation of which the data records (31, 32, 33) assigned to the respective inputs (23, 24) are transferred, in particular from the database (3).

3. Engineering system according to claim 1, wherein the data records (31, 32, 33) assigned to the outputs (25, 26) are imported into the database (3) following completion of the production process (2, 4 ... 11).

4. Engineering system according to claim 1, wherein each data record (31, 32, 33) can be assigned an identifier or type information and in particular a format.

5. Automation system (1) comprising at least one automation device, a database (3) and at least one first and one second production station (2, 4, 5, 6, 7, 8, 9, 10, 11) controlled and/or monitored by the automation device,
wherein the first production station (2, 4 ... 11) is assigned at least one first production module (20) and the second production station (2, 4 ... 11) is assigned at least one second production module (20), each of which has an input interface (21) and an output interface (22),
wherein each input interface (21) has a predefinable number of inputs (23, 24) and each output interface has a predefinable number of outputs (24, 25) and
wherein the database (3) includes a number of data records (31, 32, 33), each of which contains at least one data item, and wherein each input (23, 24) and each output (24, 25) is assigned one of the data records (31, 32, 33),
**characterised in that**
the first production module (20) is linked to the second production module (20)
and upon completion of the production process (2, 4 ... 11) to which the first production module (20) is assigned, the data records (31, 32, 33) assigned to the respective inputs (23, 24) of the linked second production module (20) are transferred by the second production module (20).

6. Automation system according to claim 5, wherein each production module (20) has a trigger input (27) upon activation of which the data records (31, 32, 33) assigned to the respective inputs (23, 24) are transferred, in particular from the database (3).

7. Automation system according to claim 5, wherein each production module (20) is assigned to a production process (2, 4 ... 11) and wherein the data records (31, 32, 33) assigned to the outputs (25, 26) are imported into the database (3) following completion of the production process (2, 4 ... 11).

8. Automation system according to claim 5, wherein each data record (31, 32, 33) is assigned an identifier, type information and in particular a format.

9. Automation system according to one of claims 5 to 8, wherein a data server (2) managing a data archive (3') and a data server production module assigned to said data server are provided, which data server production module has the same functionality as the first or second production module (20) and is linked to the first and/or second production module (20).

10. Automation system according to one of claims 5 to 9, comprising an engineering system according to one of claims 1 to 4.

## Revendications

1. Système d'ingénierie (1) avec une base de données (3) et avec au moins un premier et un deuxième module de production (20) qui comporte une interface d'entrée (21) et une interface de sortie (22),
dans lequel chaque module de production (20) peut être associé à un processus de production (2, 4, 5, 6, 7, 8, 9, 10, 11),
dans lequel chaque interface d'entrée (21) comprend un nombre pouvant être prescrit d'entrées (23, 24) et chaque interface de sortie (22) comprend un nombre pouvant être prescrit de sorties (25, 26), et
dans lequel la base de données (30) comprend un nombre de blocs de données (31, 32, 33) ayant chacun au moins une donnée, un des blocs de données (31, 32, 33) pouvant être associé à chaque entrée (23, 24) et à chaque sortie (25, 26),
**caractérisé par le fait que**
le premier module de production (20) peut être lié au deuxième module de production (20)
et, à la fin du processus de production (2, 4, ..., 11) auquel le premier module de production (20) est associé, les blocs de données (31, 32, 33) associés aux entrées respectives (23, 24) du deuxième module de production (20) lié sont repris par le deuxième module de production (20).

2. Système d'ingénierie selon la revendication 1, dans lequel chaque module de production (20) comporte une entrée de déclenchement (27) lors de l'activation de laquelle les blocs de données (37., 32, 33) associés aux entrées respectives (23, 24) sont repris - notamment à partir de la base de données (3).

3. Système d'ingénierie selon la revendication 1, dans lequel les blocs de données (31, 32, 33) associés aux sorties (25, 26) sont transférés dans la base de données (3) après la fin du processus de production (2, 4, ..., 11).

4. Système d'ingénierie selon la revendication 1, dans lequel un nom ou une information de type et notamment un format peuvent être associés à chaque bloc de données (31, 32, 33).

5. Système d'automatisation (1) avec au moins un appareil d'automatisation, avec une base de données (3) et avec au moins un premier et un deuxième poste de production (2, 4, 5, 6, 7, 8, 9, 10, 11) commandé et/ou surveillé par l'appareil d'automatisation,
dans lequel il est associé au premier poste de production (2, 4, ..., 11) au moins un premier module de production (20) et au deuxième poste de production (2, 4, ..., 11) au moins un deuxième module de production (20), lesquels modules de production comportent chacun une interface d'entrée (21) et une interface de sortie (22),
dans lequel chaque interface d'entrée (21) comprend un nombre pouvant être prescrit d'entrées (23, 24) et chaque interface de sortie (22) comprend un nombre pouvant être prescrit de sorties (25, 26), et
dans lequel la base de données (3) comprend un nombre de blocs de données (31, 32, 33) ayant chacun au moins une donnée, un des blocs de données (31, 32, 33) étant associé à chaque entrée (23, 24) et à chaque sortie (25, 26),
**caractérisé par le fait que**
le premier module de production (20) est lié au deuxième module de production (20)
et, à la fin du processus de production (2, 4, ..., 11) auquel le premier module de production (20) est associé, les blocs de données (31, 32, 33) associés aux entrées respectives (23, 24) du deuxième module de production (20) lié sont repris par le deuxième module de production (20).

6. Système d'automatisation selon la revendication 5, dans lequel chaque module de production (20) comporte une entrée de déclenchement (27) lors de l'activation de laquelle les blocs de données (31, 32, 33) associés aux entrées respectives (23, 24) sont repris, notamment à partir de la base de données (3).

7. Système d'automatisation selon la revendication 5, dans lequel chaque module de production (20) est associé à un processus de production (2, 4, ..., 11) et dans lequel les blocs de données (31, 32, 33) associés aux sorties (25, 26) sont transférés dans la base de données (3) après la fin du processus de production (2, 4, ..., 11).

8. Système d'automatisation selon la revendication 5, dans lequel un nom, une information de type et notamment un format sont associés à chaque bloc de données (31, 32, 33).

9. Système d'automatisation selon l'une des revendications 5 à 8, dans lequel il est prévu un serveur de données (2) gérant des archives de données (3') et un module de production de serveur de données, associé à celui-ci, qui a la même fonctionnalité que le premier ou le deuxième module de production (20) et qui est lié au premier et/ou au deuxième module de production (20).

10. Système d'automatisation selon l'une des revendications 5 à 9 avec un système d'ingénierie selon l'une des revendications 1 à 4.
